# EUROPEAN PATENT APPLICATION

(11) **EP 1 845 491 A1**
(43) Date of publication of application: **17.10.2007**
(21) Application number: 06712900.7
(22) Date of filing: 02.02.2006
(51) Int. Cl.: G06T 1/00, G06T 11/60, H04N 1/387, G06F 17/30

(54) **IMAGE EDITING DEVICE, IMAGE EDITING METHOD, IMAGE EDITING PROGRAM AND COMPUTER READABLE RECORDING MEDIUM**

(30) Priority: 03.02.2005 JP 2005028277
(71) Applicant: Pioneer Corporation, Tokyo 1538654 (JP)
(72) Inventor: SATO, Takeshi c/o Pioneer Corporation, Tokyo, 1538654 (JP); YANO, Kenichiro Pioneer Corporation, Tokyo, 1538654 (JP); KOGA, Koji c/o Pioneer Corporation, Tokyo, 1538654 (JP); KOBAYASHI, Goro c/o Pioneer Corporation, Tokyo, 1538654 (JP)
(74) Representative: Haley, Stephen
(86) International application number: PCT/JP2006/301757
(87) International publication number: WO 2006/082886

(57) **Abstract**

An image editing apparatus includes an input unit (103) that accepts input of image data including information concerning a date and a time, an acquisition unit (104) that acquires information concerning a route and a clock time that a mobile object travels, and an association unit (105) that associates the image data with map information based on the information concerning the date and the time in the image data accepted by the input unit (103) and the information concerning the route and the clock time acquired by the acquisition unit (104). The image editing apparatus automatically edits the image data in the time-series order or the route order.

## Description

### TECHNICAL FIELD

The present invention relates to an image editing apparatus, an image editing method, an image editing program, and a computer-readable recording medium that edit image data such as a photograph. However, use of the present invention is not restricted to the image editing apparatus, the image editing method, the image editing program, and the computer-readable recording medium.

### BACKGROUND ART

In recent years, with spread of a digital still camera (DSC), a digital video camera (DVC), and others, an electronic-album creating apparatus that creates a so-called electronic album using image data, e.g., a captured still image or moving image so that the created album can be readily released on a web page and others is provided. Such an electronic-album creating apparatus creates an electronic album as follows.

Specifically, program software that edits digital image data to create an electronic album is provided in a server connected to, e.g., the Internet, the server can receive image data captured by a digital camera, capturing time data of the image, position data acquired by a mobile terminal, and time data when the position data is acquired, and these pieces of received data are associated with each other to create an electronic album by using the program software (refer to, for example, Patent Document 1).

Patent Document 1: Japanese Patent Application Laid-open Publication No. 2002-183742

### DISCLOSURE OF INVENTION

### PROBLEM TO BE SOLVED BY THE INVENTION

However, in the electronic-album creating apparatus disclosed in Patent Document 1, since the program software in the server associates, for example, a capturing time and a capturing place of image data with each other to create the electronic album, a connection environment with respect to the server must be established and the entire apparatus structure becomes complicated as an example of a problem.

### MEANS FOR SOLVING PROBLEM

An image editing apparatus according to the invention of claim 1 includes an input unit that receives an input of image data including information on a date and a time; an acquiring unit that acquires information on a route and a time at which a mobile object has passed a point on the route; and an associating unit that associates the image data with map information based on the information on the date and the time in the image data received by the input unit and the information on the route and the time acquired by the acquiring unit.

Moreover, an image editing method according to the invention of claim 10 includes an input step of receiving an input of image data including information on a date and a time; an acquiring step of acquiring information on a route and a time at which a mobile object has passed a point on the route; and an associating step of associating the image data with map information based on the information on the date and the time in the image data received by the input unit and the information on the route and the time acquired by the acquiring unit.

Moreover, an image editing program according to the invention of claim 11 causes a computer to execute the image editing method according to claim 10.

Moreover, a computer-readable recording medium according to the invention of claim 12 stores therein the image editing program according to claim 11.

### BRIEF DESCRIPTION OF DRAWINGS

Fig. 1 is a block diagram of an example of a functional structure of an image editing apparatus according to an embodiment;
Fig. 2 is a flowchart of an example of an image-editing processing performed by the image editing apparatus according to the embodiment;
Fig. 3 is an explanatory drawing of an example of the inside of a vehicle having the image editing apparatus according to an example mounted therein;
Fig. 4 is a block diagram of an example of a hardware structure of the image editing apparatus according to the example;
Fig. 5 is a block diagram of an example of an internal structure of an image editor in the image editing apparatus according to the example;
Fig. 6 is a block diagram of an example of an internal structure of a sound reproducer in the image editing apparatus according to the example;
Fig. 7 is a flowchart of an example of an image-editing processing performed by the image editing apparatus according to the example;
Fig. 8 is a flowchart of an example of still another association processing for audio data in the image editing processing by the image editing apparatus according to the example;
Fig. 9 is a flowchart of an example of still another association processing for audio data in the image editing processing by the image editing apparatus according to the example;
Fig. 10 is an explanatory drawing of an example of a distribution processing for image data in the image editing processing by the image editing apparatus according to the example; and
Fig. 11 is an explanatory view of a specific processing example of the image editing processing by the image editing apparatus according to the example.

### EXPLANATIONS OF LETTERS OR NUMERALS

- 101: capturer
- 102: sound collector
- 103: input unit
- 104: acquisition unit
- 105: association unit
- 106: display unit
- 107: detector
- 108: controller
- 109, 414: sound reproducer
- 310: image editing apparatus
- 412: image editor
- 510: image editing processor
- 610: sound reproduction processor

### BEST MODE(S) FOR CARRYING OUT THE INVENTION

Exemplary embodiments of an image editing apparatus, an image editing method, an image editing program, and a computer-readable recording medium storing therein the program according to the present invention will be explained in detail hereinafter with reference to the accompanying drawings.

### (Embodiment)

### (Functional Structure of Image Editing Apparatus)

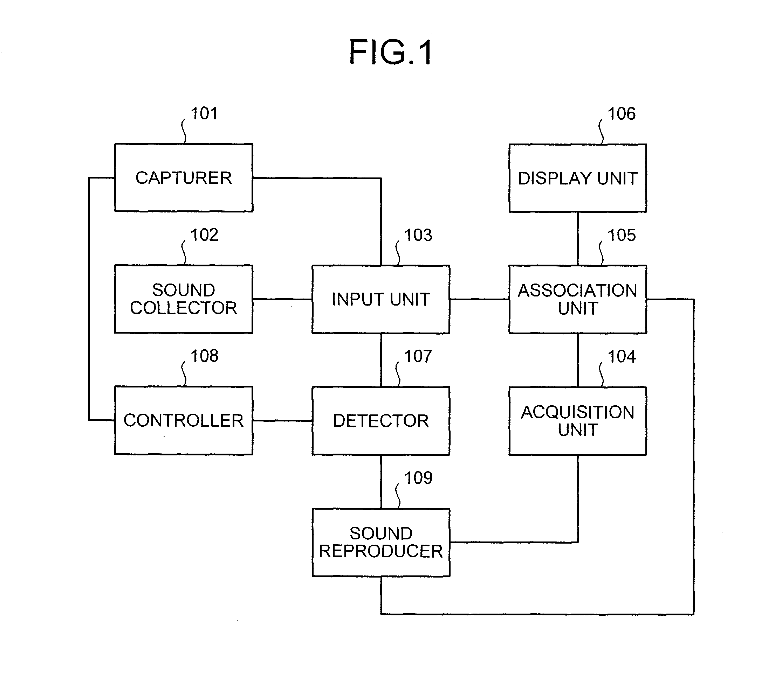

Contents of an image editing apparatus according to an embodiment of the present invention will be first explained. Fig. 1 is a block diagram of an example of a functional structure of an image editing apparatus according to an embodiment of the present invention. As shown in Fig. 1, the image editing apparatus is mounted in a mobile object, e.g., a vehicle (including a four-wheel vehicle and a two-wheel vehicle), and includes a capturer 101, a sound collector 102, an input unit 103, an acquisition unit 104, an association unit 105, a display unit 106, a detector 107, a controller 108, and a sound reproducer 109.

The capturer 101 captures an image. The image captured by the capturer 101 includes an image obtained by capturing the inside or the outside of a vehicle. The capturer 101 is integrally or detachably attached to the image editing apparatus. The sound collector 102 collects, for example, a sound inside of the vehicle. The sound collected by the sound collector 102 includes a sound collected from a sound field in the vehicle.

The input unit 103 accepts input of image data including information concerning a date and a time (e.g., time stamp data). The input unit 103 also accepts input of image data of an image captured by the capturer 101 and audio data of a sound collected by the sound collector 102. The acquisition unit 104 acquires information concerning a route and a clock time of traveling of the vehicle. The acquisition unit 104 also acquires behavior information concerning behaviors of the vehicle. The behavior information is specifically information indicative of a movement or a stopped state of the vehicle, and includes, as the behavior information, e.g., at least one of information concerning a vehicle speed (speed information, acceleration information, angular speed information, and others), tilt angle information, lateral gravity (G) information, and current position information.

The association unit 105 associates the image data with map information based on the information concerning a date and a time of the image data accepted by the input unit 103, and the information concerning a route and a clock time of the vehicle and the behavior information acquired by the acquisition unit 104. Association carried out by the association unit 105 determines when and where the image data is captured by the capturer 101.

The display unit 106 displays the image data associated by the association unit 105. The display unit 106 may display the image data arranged in, e.g., a time-series order of capturing the image data or a route order of traveling of the vehicle. The detector 107 detects a characteristic amount of a picture image included in the image data of an image captured by the capturer 101 and a characteristic amount of a sound parameter included in audio data of a sound collected by the sound collector 102.

Specifically, the characteristic amount of the picture image includes, e.g., a characteristic amount of a facial picture image of a person included in a picture image of the image data. As the characteristic amount of the sound parameter, specifically, there are, e.g., characteristic amounts of a sound volume component (magnitude of a sound volume), a time component (sound production duration time) and a frequency component (magnitude of a frequency).

The controller 108 controls the capturer 101 based on the characteristic amount of the picture image and the characteristic amount of the sound parameter detected by the detector 107. The controller 108 also controls the capturer 101 to capture an image when the characteristic amount detected by the detector 107 is changed.

The sound reproducer 109 reproduces audio data. When displaying the image data in the display unit 106, the sound reproducer 109 selects audio data to be reproduced based on, e.g., the characteristic amount detected by the detector 107 and the behavior information acquired by the acquisition unit 104. The sound reproduced by the sound reproducer 109 includes, e.g., musical pieces, sound effects, and others.

### (Image-Edition Processing Procedure of Image Editing Apparatus)

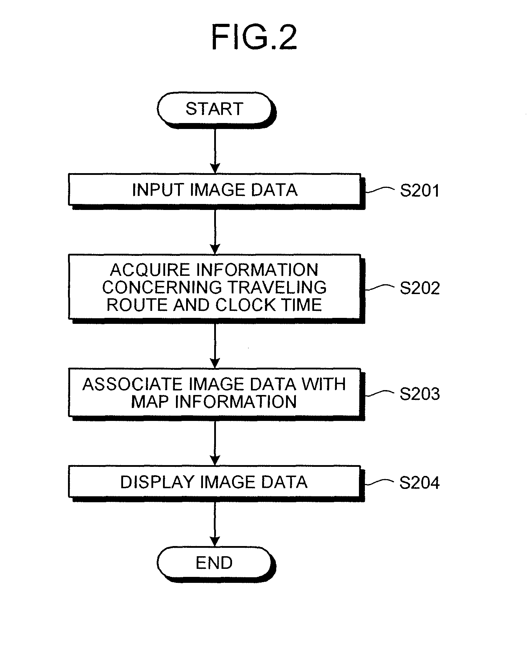

An image-edition processing procedure of the image editing apparatus according to the embodiment of the present invention will be explained. Fig. 2 is a flowchart of an example of an image-edition processing procedure of the image editing apparatus according to the embodiment of the present invention.

As shown in the flowchart of Fig. 2, first, the input unit 103 (see Fig. 1 hereafter) inputs image data including a picture image of, e.g., a person or a landscape and information concerning a date and a time from one or more capturers 101 (see Fig. 1 hereafter) (step S201). Then, the acquisition unit 104 (see Fig. 1 hereafter) acquires information concerning a route and a time of traveling of a vehicle (step S202).

The association unit 105 (see Fig. 1 hereafter) associates the image data with map information based on the information concerning the date and the time of the image data input at the step S201 and the information concerning the route and the time acquired at the step S202 (step S203). After associating the image data with the map information in this manner, the display unit 106 (see Fig. 1 hereafter) displays the image data (step S204). With these operations, the image editing processing based on the flowchart ends.

Although not shown, in the display processing of the image data by the display unit 106 at the step S204, the sound reproducer 109 (see Fig. 1 hereafter) may select audio data to be reproduced based on the characteristic amount of the picture image and the characteristic amount of the sound parameter detected by the detector 107 (see Fig. 1 hereafter) and the behavior information acquired by the acquisition unit 104, thereby reproducing the selected audio data. When the characteristic amount detected by the detector 107 is changed, the controller 108 (see Fig. 1 hereafter) may control the capturer 101 to capture an image.

As explained above, according to the image editing apparatus based on the embodiment of the present invention, the input image data can be associated with the map information based on the information concerning the date and the time of the image data and the acquired information concerning the route and the clock time without using, e.g., a server. Therefore, the image data obtained during driving of a vehicle can be automatically edited in the time-series order or the traveling route order in association with a passage point or a passage time of the vehicle without complicating the structure of the apparatus, thereby reducing a complicated operation in image editing and a cost.

An example of the embodiment according to the present invention will be explained in detail. An example where the image editing apparatus according to the embodiment is applied to an in-vehicle navigation apparatus will be explained.

### Example

### (Explanation of Inside of Vehicle Having Image Editing Apparatus Mounted Thereon)

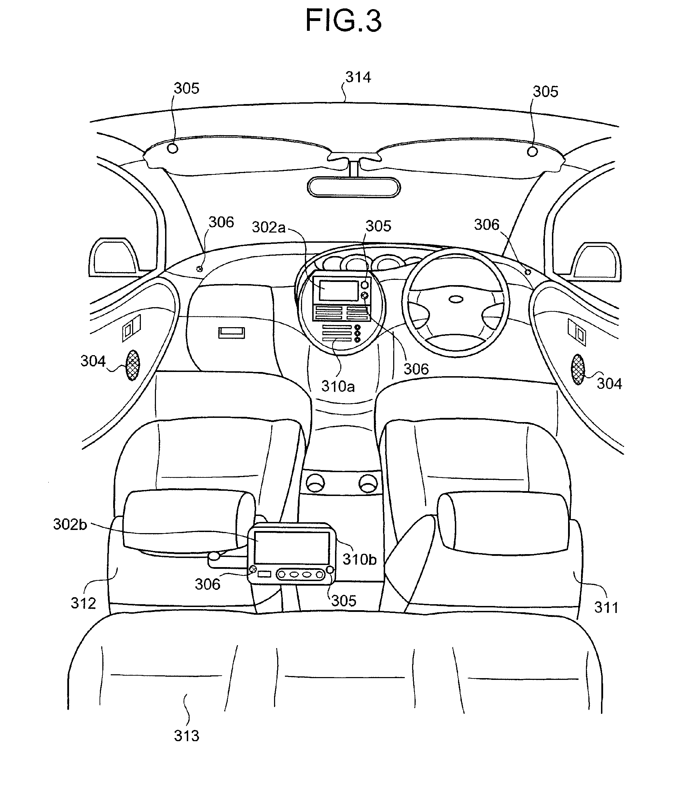

The inside of a vehicle having the image editing apparatus according to the example of the present invention mounted therein will be first explained. Fig. 3 is an explanatory drawing of an example of the inside of a vehicle having the image editing apparatus according to the example of the present invention mounted therein. As shown in Fig. 3, a monitor 302a as the display unit 106 shown in Fig. 1 and speakers 304 as sound output devices that are the sound reproducer 109 are disposed around, e.g., a driver's seat 311 and a passenger's seat 312. Cameras 305 as the capturer 101 in Fig. 1 and microphones 306 as the sound collector 102 are disposed in a ceiling portion 314 of the vehicle.

A monitor 302b as the display unit 106 is disposed to the passenger's seat 312 for passengers in a rear seat 313. An image editing apparatus 310 (310a and 310b) includes the monitor 302 (302a and 302b), the speakers 304, the cameras 305, and the microphones 306. It is to be noted that the cameras 305 and the microphones 306 may be individually mounted in the image editing apparatus 310 (310a and 310b). The image editing apparatus 310 (310a and 310b) may have a structure that can be attached to/detached from the vehicle.

### (Hardware Structure of Image Editing Apparatus)

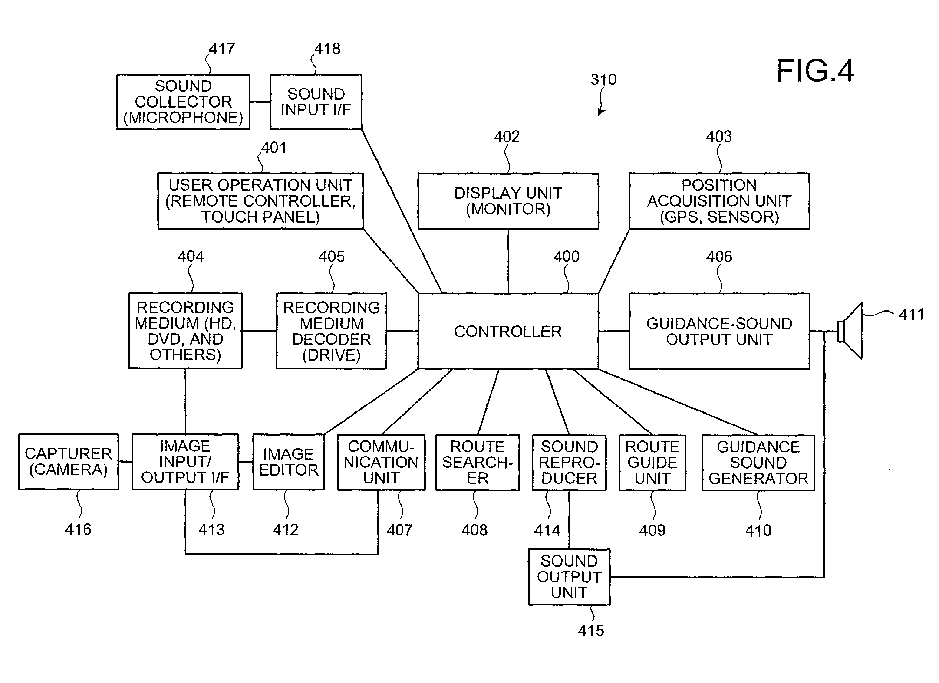

A hardware structure of the image editing apparatus according to the example of the present invention will be explained. Fig. 4 is a block diagram of an example of a hardware structure of the image editing apparatus according to the example of the present invention.

As shown in Fig. 4, the image editing apparatus 310 is detachably mounted in a vehicle as explained above, and configured to include a controller 400, a user operation unit (remote controller, touch panel) 401, a display unit (monitor) 402, a position acquisition unit (GPS, sensor) 403, a recording medium 404, a recording medium decoder 405, a guidance-sound output unit 406, a communication unit 407, a route searcher 408, a route guide unit 409, a guidance sound generator 410, a speaker 411, an image editor 412, an image input/output I/F 413, a sound reproducer 414, a sound output unit 415, a capturer 416, a sound collector 417, and a sound input I/F 418.

The controller 400 controls, e.g., the entire image editing apparatus 310, and executes various kinds of arithmetic operations according to a control program to entirely control respective units included in the image editing apparatus 310. The controller 400 can be realized by, e.g., a micro computer formed of a central processing unit (CPU) that executes predetermined arithmetic processing, a read only memory (ROM) that stores various kinds of control programs, a random access memory (RAM) that functions as a work area for the CPU, and others.

In a route guidance for a vehicle, the controller 400 calculates where in a map the vehicle is currently traveling based on information concerning a current position of the vehicle acquired by the position acquisition unit 403 (current position information) and map information obtained from the recording medium 404 through the recording medium decoder 405, and outputs a calculation result to the display unit 402. The controller 400 inputs/outputs information concerning the route guidance to/from the route searcher 408, the route guide unit 409, and the guidance sound generator 410 in the route guidance, and outputs resultant information to the display unit 402 and the guidance-sound output unit 406.

The user operation unit 401 outputs information input through an operation by a user, e.g., characters, numeric values, or various kinds of instructions to the controller 400. As a structure of the user operation unit 401, various kinds of known conformations, e.g., a push-button type switch that detects a physical pushed/non-pushed state, a touch panel, a keyboard, a joystick, and others can be adopted. The user operation unit 401 may utilize, e.g., a microphone that inputs a sound from the outside like a later-explained sound collector 417 to perform an input operation using the sound.

The user operation unit 401 may be integrally provided to the image editing apparatus 310, or may be operable from a position separated from the image editing apparatus 310 like a remote controller. The user operation unit 401 may be formed as one or more of these various kinds of conformations. A user appropriately performs an input operation according to a conformation of the user operation unit 401 to input information.

Information input through an input operation of the user operation unit 401 includes, e.g., destination information concerning navigation. Specifically, when the image editing apparatus 310 is provided in, e.g., a vehicle, a position aimed by a person who is in the vehicle is set. Information input to the user operation unit 401 includes, e.g., information of a display format of image data in an electronic album input from the later-explained image input/output I/F 413 to the image editor 412 in relation to image editing. Specifically, a display format of an electronic album desired by a person who is in the vehicle is set.

When adopting, e.g., a touch panel as a conformation of the user operation unit 401, the touch panel is laminated on a display screen side of the display unit 402 and used in the laminated state. In this case, managing a display timing in the display unit 402, an operation timing with respect to the touch panel (user operation unit 401), and a position coordinate enables recognizing input information obtained based on an input operation. When the touch panel laminated on the display unit 402 is adopted as a conformation of the user operation unit 401, many pieces of information can be input without increasing a size of the conformation of the user operation unit 401. As the touch panel, various kinds of known touch panels, e.g., a resistance film type and a pressure sensitive type can be adopted.

The display unit 402 includes, e.g., a cathode ray tube (CRT), a TFT liquid crystal display, an organic EL display, a plasma display, and others. Specifically, the display unit 402 can be formed of, e.g., a picture I/F or a display device for picture display connected to the picture I/F (not shown). The picture I/F is specifically formed of, e.g., a graphic controller that controls the entire display device, a buffer memory, e.g., a video RAM (VRAM) that temporarily stores image information that can be immediately displayed, a control IC or a graphics processing unit (GPU) that performs display control over the display device based on image information output from the graphic controller, and others. The display unit 402 displays an icon, a cursor, a menu, a window, or various kinds of information such as characters or images. The display unit 402 also displays image data edited by the later-explained image editor 412.

The position acquisition unit 403 receives electric waves from, e.g., an artificial satellite to acquire a current position information (longitude and latitude information) of a vehicle having the image editing apparatus 310 mounted therein. Here, the current position information is information acquired by receiving electric waves from the artificial satellite to obtain geometric information with respect to the artificial satellite, and it can be measured anywhere on the earth. It is to be noted that the position acquisition unit 403 includes a GPS antenna (not shown). Here, the global positioning system (GPS) is a system that receives electric waves from four or more artificial satellites to accurately obtain a position on the earth. Here, the explanation about the GPS will be omitted since it is a known technology. The position acquisition unit 403 can be formed of, e.g., a tuner that demodulates electric waves received from an artificial satellite or an arithmetic circuit that calculates a current position based on the demodulated information.

It is to be noted that, as the electric wave from an artificial satellite, an L1 electric wave that is a carrier wave of 1.57542 GHz and has a coarse and acquisition (C/A) code and a navigation message thereon is used, for example. As a result, a current position (latitude and longitude) of the vehicle having the image editing apparatus 310 mounted therein is detected. It is to be noted that, when detecting a current position of the vehicle, information collected by various kinds of sensors, e.g., a vehicle speed sensor or a gyro sensor may be added. The vehicle speed sensor detects a vehicle speed from an output-side shaft of a transmission in the vehicle having the image editing apparatus 310 mounted therein.

Besides, when detecting a current position of the vehicle, information collected by various kinds of sensors, e.g., an angular speed sensor, a traveling distance sensor, a tilt angle sensor, or a lateral gravity (G) sensor may be added. The angular speed sensor detects an angular speed when the vehicle rotates, and outputs angular speed information and relative direction information. The traveling distance sensor counts the number of pulses in a pulse signal having a predetermined cycle that is output with rotations of wheels to calculate the number of pulses per rotation of the wheels, and outputs traveling distance information based on the number of pulses per rotation. The tilt angle sensor detects a tilt angle of a road surface, and outputs tilt angle information. The lateral G sensor detects a lateral G that is an outward force that occurs due to a centrifugal force at the time of cornering of the vehicle, and outputs lateral G information. It is to be noted that the current position information of the vehicle acquired by the position acquisition unit 403 or information detected by the vehicle speed sensor, the gyro sensor, the angular speed sensor, the traveling distance sensor, the tilt angle sensor, and the lateral G sensor is output to the controller 400 as behavior information concerning behaviors of the vehicle.

The recording medium 404 records various kinds of control programs or various kinds of information in a computer-readable state. The recording medium 404 accepts writing information by the recording medium decoder 405, and records the written information in a non-volatile state. The recording medium 404 can be realized by, e.g., a hard disk (HD). The recording medium 404 is not restricted to the HD, and a medium that can be attached to/detached from the recording medium decoder 405 and has portability, e.g., a digital versatile disk (DVD) or a compact disk (CD) may be used as the recording medium 404 in place of the HD or in addition to the HD. The recording medium 404 is not restricted to the DVD and the CD, and a medium that can be attached to/detached from the recording medium decoder 405 and has portability, e.g., a CD-ROM (CD-R, CD-RW), a magneto-optical disk (MO), or a memory card can be also utilized.

It is to be noted that the recording medium 404 stores an image editing program that realizes the present invention, a navigation program, image data, and map information recorded therein. Here, the image data means a value in a two-dimensional array representing a picture image concerning, e.g., a person or a landscape. The map information includes background information representing a feature, e.g., a building, a river, or a ground level and road shape information representing a shape of a road, and is two-dimensionally or three-dimensionally drawn in a display screen of the display unit 402.

The background information includes background shape information representing a shape of a background and background type information representing a type of the background. The background shape information includes information representing, e.g., a typical point of a feature, a polyline, a polygon, or a coordinate of the feature. The background type information includes text information indicating, e.g., a name, an address, or a telephone number of a feature, type information representing a type of the feature, e.g., a building or a river, and others.

The road shape information is information concerning a road network having a plurality of nodes and links. The node is information indicative of an intersection where plural roads cross, e.g., a junction of three streets, a crossroad, or a junction of five streets. The link is information indicative of a road coupling the nodes. Some of the links includes a shape complementary point that enables representing a curved road. The road shape information includes traffic condition information. The traffic condition information is information indicative of characteristics of an intersection, a length of each link (distance), a car width, a traveling direction, passage prohibition, a road type, and others.

The characteristics of the intersection includes, e.g., a complicated intersection such as a junction of three streets or a junction of five streets, an intersection where a road bisects at a shallow angle, an intersection near a destination, an entrance/exit or a junction of an expressway, an intersection having a high route deviation ratio, and others. The route deviation ratio can be calculated from a past traveling history. The road types include an expressway, a toll road, a general road, and others.

It is to be noted that the image data or the map information is recorded in the recording medium 404 in the example, but the present invention is not restricted thereto. The image data or the map information is not recorded in a medium provided integrally with the hardware of the image editing apparatus 310 alone, and the medium may be provided outside the image editing apparatus 310.
In this case, the image editing apparatus 310 acquires the image data through, e.g., the communication unit 407 via a network. The image editing apparatus 310 also acquires the map information through, e.g., the communication unit 407 via the network. The image data or map information acquired in this way may be recorded in, e.g., a RAM in the controller 400.

The recording medium decoder 405 controls reading/writing information from/to the recording medium 404. For example, when an HD is used as the recording medium 404, the recording medium decoder 405 serves as a hard disk drive (HDD). Likewise, when a DVD or a CD (including a CD-R or a CD-RW) is used as the recording medium 404, the recording medium decoder 405 serves as a DVD drive or a CD drive. When utilizing a CD-ROM (CD-R, CD-RW), an MO, or a memory card as the writable and detachable recording medium 404, a dedicated drive device that can write information into various kinds of recording mediums or read information stored in various kinds of recording mediums may be appropriately used as the recording medium decoder 405.

The guidance-sound output unit 406 controls output to the connected speaker 411 to reproduce a guidance sound for navigation. One or more speakers 411 may be provided. Specifically, the guidance-sound output unit 406 can be realized by a sound I/F (not shown) connected to the sound output speaker 411. More specifically, the sound I/F can be formed of, e.g., a D/A converter that performs D/A conversion of digital audio data, an amplifier that amplifies an analog sound signal output from the D/A converter, and an A/D converter that performs A/D conversion of an analog sound signal.

The communication unit 407 carries out communication with another image editing apparatus. The communication unit 407 in the example may be a communication module that performs communication with a communication server (not shown) through a base station (not shown) like a mobile phone, or may be a communication module that directly carries out wireless communication with another image editing apparatus. Here, wireless communication means communication that is performed by using electric waves or infrared rays/ultrasonic waves without utilizing a wire line serving as a communication medium. As standards that enable wireless communication, there are various kinds of technologies, e.g., wireless LAN, infrared data association (IrDA), home radio frequency (HomeRF), Bluetooth, and others, but various kinds of known wireless communication technologies can be utilized in the example. It is to be noted that the wireless LAN can be utilized as a preferable example from the aspect of an information transfer rate and others.

Here, the communication unit 407 may periodically (or occasionally) receive road traffic information of, e.g., a traffic jam or a traffic regulation. The communication unit 407 may receive the road traffic information at timing of distribution of the road traffic information from a vehicle information and communication system (VICS) center or may receive it by periodically requesting the VICS center for the road traffic information. The communication unit 407 can be realized as, e.g., an AM/FM tuner, a TV tuner, a VICS/beacon receiver, or any other communication device.

It is to be noted that the "VICS" means an information communication system that transmits the road traffic information of, e.g., a traffic jam or a traffic regulation edited and processed in the VICS center in real time and displays the information in the form of characters/figures in an in-vehicle device, e.g., a car navigation apparatus although its detailed explanation will be omitted since it is a known technology. As a method of transmitting the road traffic information (VICS information) edited and processed in the VICS center to the navigation device, there is a method of utilizing a "beacon" and "FM multiple broadcasting" installed in each road. The beacon includes an "electric wave beacon" mainly used in expressways and an "optical beacon" used in primary general roads. When the "FM multiple broadcasting" is utilized, road traffic information in a wide area can be received. When the "beacon" is utilized, the road traffic information required at a position where a driver's own car is placed, e.g., detailed information of an immediately adjacent road based on a position of the driver's own car (vehicle) can be received. When a communication method with respect to another image editing apparatus is different from a communication method of receiving image data or road traffic information, the communication unit 407 may include plural communicating units associated with the respective communication methods.

The route searcher 408 calculates an optimum route from a current position to a destination based on current position information of the vehicle acquired by the position acquisition unit 403 and information of the destination input by a user. The route guide unit 409 generates real-time route guide information based on information concerning a guide route searched by the route searcher 408, route information received by the communication unit 407, and the current position information acquired by the position acquisition unit 403, and the map information obtained from the recording medium 404 through the recording medium decoder 405. The route guide information generated by the route guide unit 409 is output to the display unit 402 via the controller 400.

The guidance sound generator 410 generates information of a tone and a sound corresponding to a pattern. In other words, the guidance sound generator 410 sets a virtual sound source corresponding to a guide point and generates sound guidance information based on the route guide information generated by the route guide unit 409, and outputs them to the guidance-sound output unit 406 via the controller 400.

The speaker 411 reproduces (outputs) a guidance sound for navigation output from the guidance-sound output unit 406 or a sound output from the later-explained sound output unit 415. It is to be noted that, for example, a headphone may be provided to the speaker 411 to appropriately change an output conformation of a guidance sound or a sound in such a manner that the whole inside of the vehicle does not serve as a sound field of the guidance sound or the sound.

The image editor 412 performs image editing processing of image data acquired from the later-explained capturer 416 and the communication unit 407 via the image input/output I/F 413 and image data recorded in the recording medium 404. Specifically, the image editor 412 includes, e.g., a GPU. The image editor 412 creates electronic album (hereinafter, "album") data using image data in response to a control command from the controller 400. Here, the album data means digital data that enables, e.g., image data captured by the capturer 416 formed of a shooting device such as a digital still camera (DSC) or a digital video camera (DVC) to be viewed in a display screen of the display unit 402 like a picture diary or a photographic album or to be browsed/edited by a personal computer and others.

The image input/output I/F 413 inputs/outputs image data that is input/output to the image editor 412 from the outside. The image input/output I/F 413 outputs, e.g., image data from the recording medium 404 that stores image data captured by the DSC or the DVC or image data that is stored in the DSC or the DVC and input from the communication unit 407 through communication based on, e.g., universal serial bus (USB), institute of electrical and electronic engineers 1394 (IEEE1394), infrared radiation and others to the image editor 412, and outputs image data output from the image editor 412 to the recording medium 404 or the communication unit 407. When inputting/outputting image data with respect to the recording medium 404, the image input/output I/F 413 may have a function of a controller that controls reading/writing of the recording medium 404. When inputting/outputting image data with respect to the communication unit 407, the image input/output I/F 413 may have a function of a communication controller that controls communication in the communication unit 407.

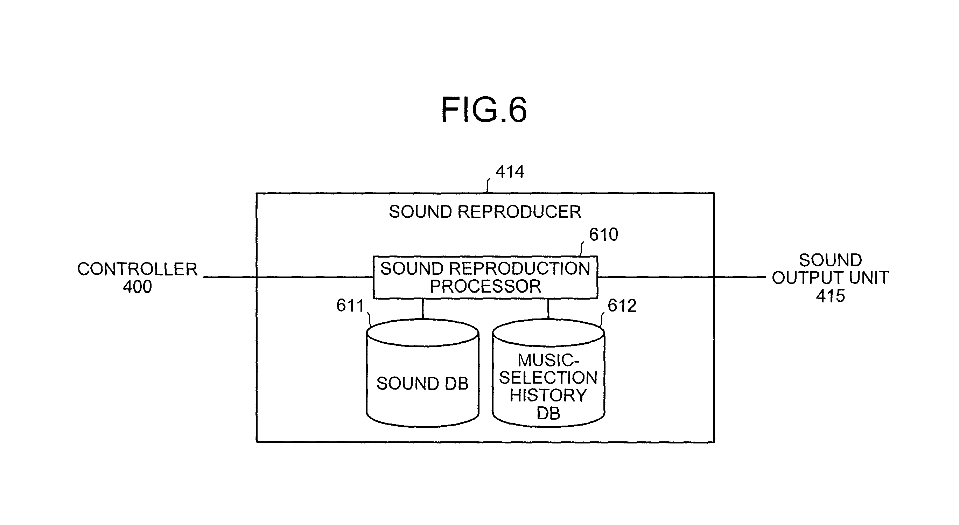

The sound reproducer 414 selects, e.g., audio data obtained from the recording medium 404 via the recording medium decoder 405, audio data obtained from the communication unit 407 through the controller 400, and others, and reproduces the selected audio data. The sound reproducer 414 reproduces audio data stored in a storage device such as a later-explained sound database (hereinafter, "sound DB") 611 (see Fig. 6). The audio data to be reproduced includes audio data, e.g., musical songs or sound effects. When the image editing apparatus 310 includes an AM/FM tuner or a TV tuner, the sound reproducer 414 may be configured to reproduce a sound from a radio receiver or a television set.

The sound output unit 415 controls output of a sound that is output from the speaker 411 based on the audio data selected and reproduced by the sound reproducer 414. Specifically, for example, the sound output unit 415 adjusts or equalizes a volume of a sound, and controls an output state of the sound. The sound output unit 415 controls output of a sound based on, e.g., an input operation from the user operation unit 401 or control by the controller 400.

The capturer 416 includes the camera 305 mounted in the vehicle shown in Fig. 3 or an external capturing device, e.g., the DSC, the DVC, and others, has a photoelectric transducer, e.g., a C-MOS or a CCD, and captures an image inside and outside the vehicle. The capturer 416 is connected to the image editing apparatus 310 with or without a cable, and captures, e.g., an image of a person who is in the vehicle in response to a capturing command from the controller 400. Image data of the image captured by the capturer 416 is output to the image editor 412 via the image input/output I/F 413.

The sound collector 417 includes, e.g., the in-vehicle microphone 306 shown in Fig. 3, and collects a sound, e.g., a vocalized sound of a person who is in the vehicle from a sound field inside the vehicle. The sound input I/F 418 converts the sound collected by the sound collector 417 into digital audio data, and outputs it to the controller 400. Specifically, the sound input I/F 418 may include, e.g., an A/D converter that converts input analog audio data into digital audio data. Besides, the sound input I/F 418 may include a filter circuit that performs filter processing with respect to the digital audio data, an amplifying circuit that amplifies the analog audio data, and others.

Here, the controller 400 judges an atmosphere in the vehicle based on image data that is captured by the capturer 416 and output from the image editor 412 or audio data that is collected by the sound collector 417 and output from the sound input I/F 418. Specifically, the atmosphere in the vehicle is judged by, e.g., detecting a change in a characteristic amount of a facial expression or a voice of a person who is in the vehicle. Therefore, the controller 400 may be configured to have a function of, e.g., a digital signal processor (DSP).

It is to be noted that the capturer 101 shown in Fig. 1 specifically realizes its function by, e.g., the capturer 416 and the sound collector 102 realizes its function by, e.g., the sound collector 417. Specifically, the input unit 103 shown in Fig. 1 realizes its function by, e.g., the image input/output I/F 413 and the sound input I/F 418 and the acquisition unit 104 realizes its function by, e.g., the position acquisition unit 403.

Specifically, the association unit 105, the detector 107, and the controller 108 shown in Fig. 1 realize their functions by, e.g., the controller 400 and the image editor 412. Specifically, the display unit 106 shown in Fig. 1 realizes its function by, e.g., the display unit 402, and the sound reproducer 109 realizes its function by, e.g., the sound reproducer 414, the sound output unit 415, and the speaker 411.

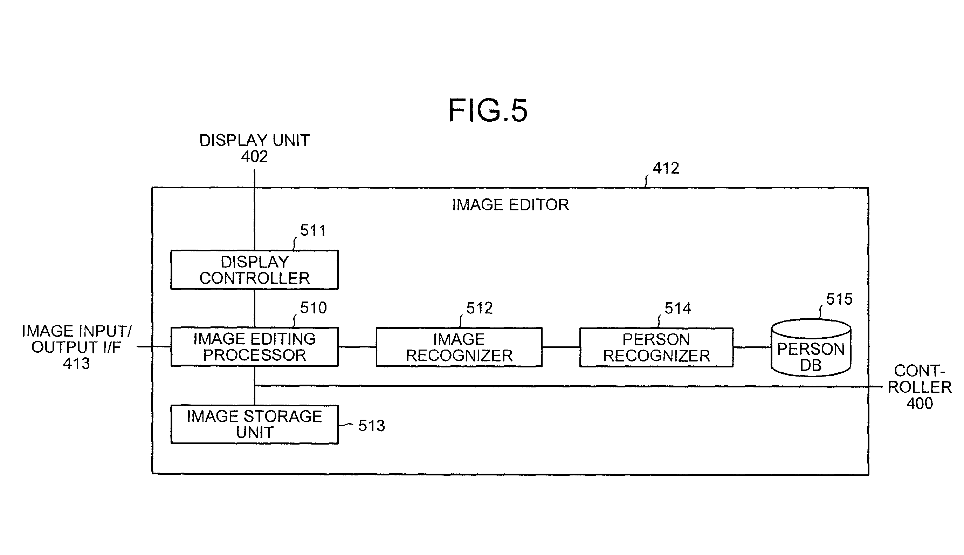

Internal structures of the image editor 412 and the sound reproducer 414 will be explained. Fig. 5 is a block diagram of an example of the internal structure of the image editor in the image editing apparatus according to the example of the present invention. Fig. 6 is a block diagram of an example of the internal structure of the sound reproducer in the image editing apparatus according to the example of the present invention.

As shown in Fig. 5, the image editor 412 includes an image editing processor 510, a display controller 511, an image recognizer 512, an image storage unit 513, a person recognizer 514, and a person database (hereinafter, "person DB") 515. The image editing processor 510 performs image editing processing with respect to image data that is input to the image editor 412 from the capturer 416 (see Fig. 4 hereafter) or the outside through the image input/output I/F 413 or image data that is input to the image editor 412 from the recording medium 404 (see Fig. 4 hereafter) through the recording medium decoder 405 (see Fig. 4 hereafter) and the controller 400 (see Fig. 4 hereafter). The image editing processor 510 reads image data stored in the later-explained image storage unit 513 to carry out image editing processing. Contents of the image editing processing include, e.g., editing image data into album data.

The display controller 511 executes control for displaying image data output from the image editing processor 510 in the form of an album in a display screen of the display unit 402. The image recognizer 512 recognizes a type of a picture image included in image data input to the image editing processor 510 based on the image data. The image storage unit 513 stores image data input to the image editing processor 510.

When a picture image in the image data input to the image editing processor 510 includes a picture image concerning a person, the person recognizer 514 reads a picture image concerning a person that is previously stored in the person DB 515 and recognizes a person represented by the picture image. Specifically, the recognition processing is carried out by, e.g., facial authentication based on a facial picture image of a person. Since the facial authentication is a known technology, an explanation thereof will be omitted here. The person DB 515 stores image data including picture images of persons who are in the vehicle, individual identification data, e.g., ages or genders of these persons, and others.

It is to be noted that the image editor 412 detects a characteristic amount of a picture image in the image data recognized by the image recognizer 512 or a picture image concerning the person recognized by the person recognizer 514, and outputs the detected amount to the controller 400. The characteristic amounts of these picture images are detected from, e.g., color tone data of a picture image or an emotion parameter of a facial picture image of a person. Specifically, the color tone data indicates a hue such as red, blue, or green that is closest to the entire picture image, and the emotion parameter indicates a facial expression such as delight, anger, sorrow, or pleasure that is closest to the facial image of the person.

On the other hand, as shown in Fig. 6, the sound reproducer 414 includes a sound reproduction processor 610, a sound database (hereinafter, "sound DB") 611, and a music selection history database (hereinafter, "music-selection history DB") 612. The sound reproduction processor 610 selects/reproduces audio data input to the sound reproducer 414 or audio data stored in the sound DB 611. The sound reproduction processor 610 selects/reproduces audio data in association with, e.g., image data in album data created by the image editor 412 (see Fig. 4 hereafter). Association of the audio data in the example may be carried out based on a characteristic amount of time stamp data included in the image data in the album data, color tone data of a picture image, a facial picture image of a person, and others.

The sound DB 611 stores audio data reproduced by the sound reproducer 414. The audio data stored in the sound DB 611 may be audio data that is input to the sound reproducer 414 from the recording medium 404 (see Fig. 4 hereafter) or the communication unit 407 (see Fig. 4 hereafter), or audio data previously provided in the image editing apparatus 310. When audio data reproduced by the sound reproducer 414 is song data, the music-selection history DB 612 stores information concerning a reproduction history or a music selection history of the song. For example, when the image editing apparatus 310 is mounted on the vehicle, the music-selection history DB 612 stores information concerning a reproduction history or a music selection history of a song reproduced during driving.

### (Image Editing Processing Procedure of Image Editing Apparatus)

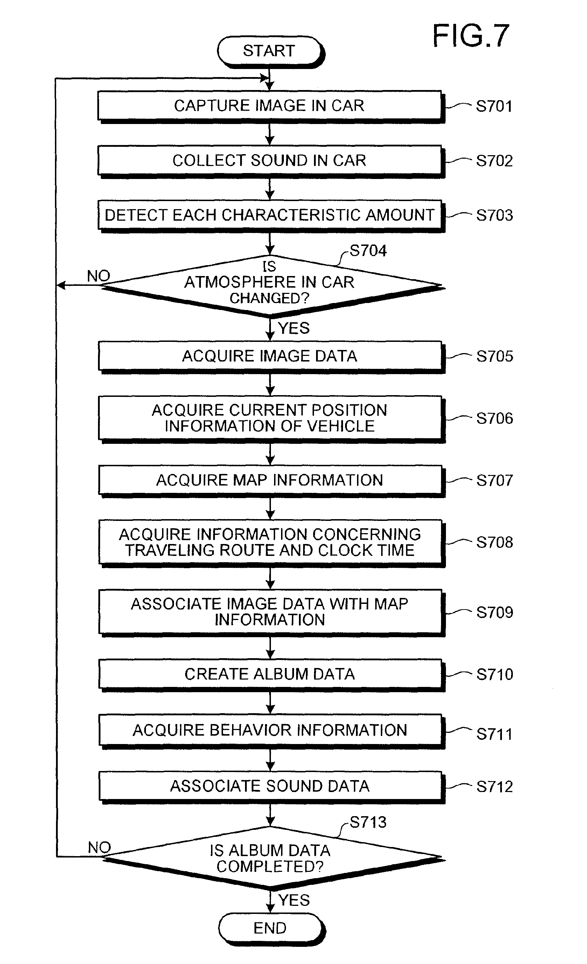

An image-editing processing procedure of the image editing apparatus according the example of the present invention will be explained. Fig. 7 is a flowchart of an example of the image-editing processing procedure of the image editing apparatus according to the example of the present invention. As shown in Fig. 7, first, the capturer 416 (see Fig. 4 hereafter) provided in the car captures an image of the inside of the car (step S701), and the sound collector 417 (see Fig. 4 hereafter) provided in the car collects a sound in the car generated from a person who is in the car (hereinafter, "passenger") (step S702).

Image data of the image captured by the capturer 416 is input to the image editor 412 (see Fig. 4 hereafter), audio data of the sound collected by the sound collector 417 is input to the controller 400 (see Fig. 4 hereafter) through the sound input I/F 418 (see Fig. 4 hereafter), and the image editor 412 and the controller 400 detect a characteristic amount of a picture image in the image data and a characteristic amount of a sound parameter in the audio data, respectively (step S703). At the step S703, information concerning the characteristic amount of the picture image detected by the image editor 412 is output to the controller 400.

After detecting the characteristic amount of the picture image and the characteristic amount of the sound parameter, the controller 400 judges whether the atmosphere in the car is changed based on the detected characteristic amounts (step S704). The judgment on whether the atmosphere in the car is changed is carried out by judging, e.g., a change in the detected characteristic amount of the picture image from an emotion parameter indicating a "smiling face" to an emotion parameter indicating a "tearful face" or a change in the characteristic amount of the sound parameter from a frequency component indicating a "laughter" to a frequency component indicating an "angry shout".

When the controller 400 determines that the atmosphere in the car is not changed at the step S704 (step S704: NO), the control returns to the step S701 to repeat the processing from the step S701 to the step S704. When it is determined that the atmosphere in the car is changed at the step S704 (step S704: YES), the image editor 412 acquires image data including time stamp data captured by the capturer 416 through the image input/output I/F 413 (step S705) .

Besides obtaining the image data at the step S705, the controller 400 acquires current position information of the vehicle from the position acquisition unit 403 (see Fig. 4 hereafter) (step S706), obtains map information from the recording medium 404 (see Fig. 4 hereafter) via the recording medium decoder 405 (see Fig. 4 hereafter) (step S707), and further acquires information concerning a route and a clock time of traveling of the vehicle (step S708).

After acquiring the information concerning the traveling route and the clock time at the step S708, the controller 400 collates the time stamp data in the image data acquired by the image editor 412 with the information of the traveling route and the clock time to detect a point in the map where the vehicle has passed at the clock time indicated in the time stamp data of the image, thereby associating the image data with the map information (step S709).

After associating the image data with the map data, the image editor 412 uses the image data to create album data (step S710). After creating the album data in this manner, the position acquisition unit 403 and others acquire behavior information on behaviors of the vehicle, e.g., information concerning a speed of the vehicle or tilt angle information (step S711).

The behavior information acquired in this manner is output to the sound reproducer 414 (see Fig. 6 hereafter) through the controller 400, the sound reproducer 414 acquires the album data from the image editor 412, and the sound reproduction processor 610 (see Fig. 6 hereafter) makes reference to audio data from the sound DB 611 (see Fig. 6 hereafter) or information concerning a music selection history from the music-selection history DB 612 (see Fig. 6 hereafter), thereby associating the audio data with the album data (step S712).

Here, in regard to association of the audio data, a land form or a road type at the time of capturing the image is judged based on, e.g., the map information or the behavior information associated with the album data, and audio data, e.g., a song matching with the judged land form or road type is read out from the sound DB 611 to be associated. Besides, reference may be made to a characteristic amount of the picture image and a characteristic amount of the sound parameter to associate audio data matching with these characteristic amounts.

After associating the audio data with the album data at the step S712, the image editor 412 and the controller 400 judge whether the album data is completed (step S713). When it is determined that the album data is yet to be completed (step S713: NO), the control returns to the step S701 to repeat the processing from the step S701 to the step S713. When it is determined that the album data is completed (step S713: YES), the series of image editing processing based on the flowchart ends.

Another association processing of the audio data with the album data at the step S712 will be briefly explained.

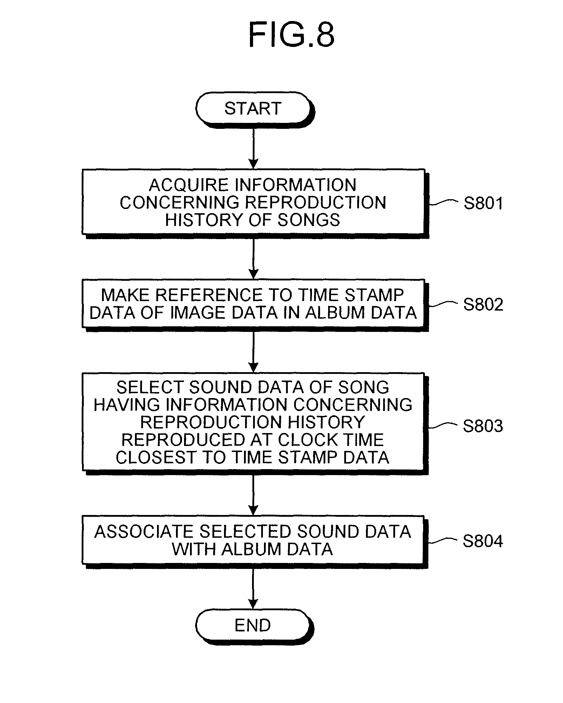

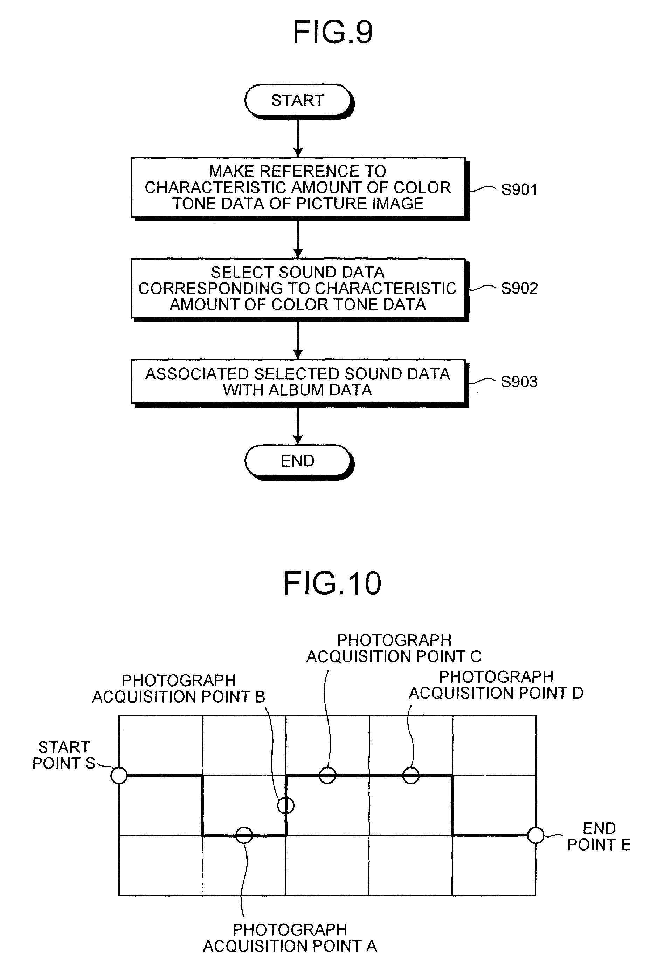

Figs. 8 and 9 are flowcharts of an example of another association processing procedure of the audio data in the image editing processing by the image editing apparatus according to the example of the present invention. It is to be noted that Fig. 8 depicts association processing based on time stamp data in image data and Fig. 9 depicts association processing based on color tone data in a picture image in the image data.

As shown in Fig. 8, first, the sound reproduction processor 610 (see Fig. 6 hereafter) in the sound reproducer 414 (see Fig. 6 hereafter) acquires, e.g., information concerning a reproduction history of songs reproduced in the image editing apparatus 310 (see Fig. 4 hereafter) from the song selection history DB 612 (see Fig. 6 hereafter) (step S801). After acquiring the information concerning the reproduction history, the sound reproduction processor 610 makes reference to time stamp data of image data in album data (step S802).

After making reference to the time stamp data at the step S802, the sound reproduction processor 610 selects audio data of a song having information concerning a reproduction history reproduced at a clock time closest to the referred time stamp data (step S803). After selecting the audio data in this manner, the sound reproduction processor 610 associates the selected audio data with the album data (step S804). At the step S804, the audio data can be associated with the album data to respond to a main part (highlight part) in the selected audio data.

On the other hand, as shown in Fig. 9, the sound reproduction processor 610 (see Fig. 6 hereafter) makes reference to, e.g., the album data from the image editing processor 510 (see Fig. 5 hereafter), and makes reference to a characteristic amount of color tone data as a characteristic amount of a picture image in entire image data in the album data (step S901). The sound reproduction processor 610 selects audio data corresponding to the referred characteristic amount of the color tone data from the sound DB 611 (see Fig. 6 hereafter) (step S902).

Selection of the audio data at the step S902 is carried out in such a manner that audio data of a melody with a sad mood is selected when a color tone of a picture image in the entire image data is blue, audio data of a melody with a healing mood is selected when the color tone is green, and audio data of an up-tempo melody is selected when the color tone is red, for example. After selecting the audio data in this manner, the sound reproduction processor 610 associates the selected audio data with the album data (step S903). At the step S903, the audio data may be associated with the album data to respond to a main part (highlight part) in the selected audio data, for example.

It is to be noted that selection of the audio data at the step S902 may be carried out based on, e.g., an emotion parameter represented by a facial picture image in the image data. In this case, for example, audio data of a melody with an upbeat mood is selected when the facial picture image represents joy, audio data of a melody with a fiery mood is selected when the image represents anger, and audio data of an up-tempo melody is selected when the image represents pleasure.

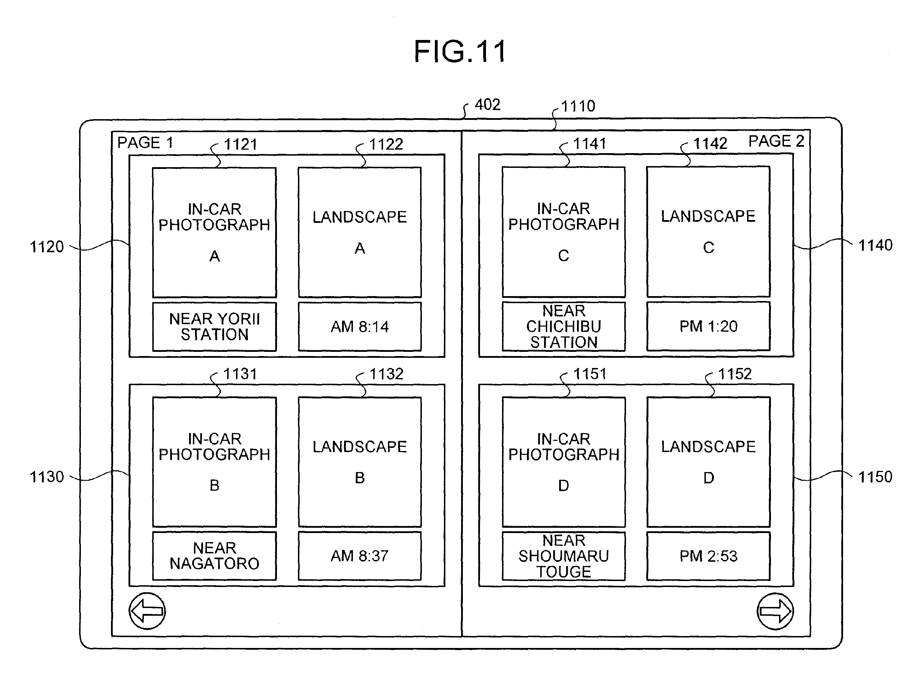

A specific example of the image editing processing by the image editing apparatus according to the example of the present invention will be explained. Figs. 10 and 11 are explanatory drawings of a specific processing example of the image editing processing by the image editing apparatus according to the example of the present invention. As shown in Fig. 10, the image editor 412 (see Fig. 5 hereafter) in the image editing apparatus 310 (see Fig. 4 hereafter) makes reference to current position information of the vehicle that is acquired by the position acquisition unit 403 (see Fig. 4 hereafter) and input through the controller 400 (see Fig. 4 hereafter) and information concerning a route and a clock time and map information input from the recording medium 404 (see Fig. 4 hereafter) through the controller 400, and acquires image data when it determines that an atmosphere in the car is changed in a traveling route from a start point S to an end point E of the vehicle based on respective characteristic amounts of a picture image and a sound parameter in image data and audio data from the capturer 416 (see Fig. 4 hereafter) and the sound collector 417 (see Fig. 4 hereafter).

In the example depicted in Fig. 10, photograph acquisition points A to D indicate that the atmosphere in the car is determined to be changed and image data is acquired. The image editor 412 associates the image data acquired at the photograph acquisition points A to D with map information based on, e.g., time stamp data of the image data acquired at the photograph acquisition points A to D and current position information of the car acquired at the photograph acquisition points A to D or information concerning a route and a clock time of the vehicle, thereby creating album data. Since audio data such as songs is associated with the album data, music and others can be appropriately automatically reproduced.

The album data created by the image editor 412 in this manner can be displayed in, e.g., a display screen of the display unit 402 (see Fig. 4 hereafter) like a double-page spread album as depicted in Fig. 11. For example, the respective pieces of image data 1120, 1130, 1140, and 1150 acquired at the photograph acquisition points A to D (see Fig. 10 hereafter) can be displayed in the displayed album data 1100 in the time-series order. In the respective pieces of displayed image data 1120, 1130, 1140 and 1150, picture images 1121, 1131, 1141, and 1151 of in-car photographs A to D at the photograph acquisition points A to D or picture images 1122, 1132, 1142, and 1152 of landscapes A to D outside the vehicle may be displayed.

In the respective pieces of displayed image data 1120, 1130, 1140 and 1150, text information showing a geographic name obtained from, e.g., the associated map information or a clock time when the image has been captured or when the vehicle has passed may be displayed. As shown in Fig. 11, for example, the image data 1120 has been captured at a clock time "AM 8:14", and represents that the photograph acquisition point A where the image has been captured is "near Yorii station". Likewise, the image data 1130 has been captured at a clock time "AM 8:37" and represents that the photograph acquisition point B where the image has been captured is "near Nagatoro". The image data 1140 has been captured at a clock time "PM 1:20" and represents that the photograph acquisition point C where the image has been captured is "near Chichibu station". The image data 1150 has been captured at a clock time "PM 2:50" and represents that the photograph acquisition point D where the image has been captured is "near Shoumaru Touge". It is to be noted that the respective pieces of image data 1120, 1130, 1140, and 1150 are displayed in the time-series order, but they may be displayed in the vehicle traveling route order, for example.

As explained above, the image editing apparatus according to the example can associate image data with map information based on time stamp data of image data captured when an atmosphere in a car is changed and information concerning a route and a clock time of traveling of the vehicle without using a server and others, thereby creating album data. Therefore, the image data can be automatically edited in the time-series order or the route order to create album data, thereby reducing a trouble for image editing.

Since the image editing apparatus according to the example can also associate image data in album data with audio data without using a server and others, thus improving entertainment properties and reducing a trouble or a cost for the image editing processing.

As explained above, according to the image editing apparatus, the image editing method, the image editing program, and the computer-readable recording medium of the present invention, an effect of appropriately automatically capturing an image and appropriately automatically associating the acquired image data with map information or audio data to create an electronic album can be demonstrated.

It is to be noted that the image editing method explained in the embodiment can be realized by executing a prepared program by using a computer, e.g., a personal computer or a work station. The program is recorded in a computer-readable recording medium, e.g., a hard disk, a flexible disk, a CD-ROM, an MO, or a DVD, and executed when read out from the recording medium by a computer. The program may be a transmission medium that can be distributed through a network, e.g., the Internet.

## Claims

1. An image editing apparatus comprising:
an input unit that receives an input of image data including information on a date and a time;
an acquiring unit that acquires information on a route and a time at which a mobile object has passed a point on the route; and
an associating unit that associates the image data with map information based on the information on the date and the time in the image data received by the input unit and the information on the route and the time acquired by the acquiring unit.

2. The image editing apparatus according to claim 1, further comprising a display unit that displays the image data associated by the associating unit.

3. The image editing apparatus according to claim 1 or 2, further comprising:
a capturing unit that captures an image;
a sound collecting unit that collects a sound;
a detecting unit that detects a characteristic amount of a picture image included in image data of the image captured by the capturing unit and a characteristic amount of a sound parameter included in audio data of the sound collected by the sound collecting unit; and
a control unit that controls the capturing unit based on the characteristic amounts detected by the detecting unit.

4. The image detecting apparatus according to claim 3, wherein the detecting unit detects a characteristic amount of a facial picture image of a person included in the image data from a picture image on the person.

5. The image editing apparatus according to claim 3, further comprising a sound reproducing unit that reproduces audio data, wherein
the acquiring unit acquires behavior information on behaviors of the mobile object, and
the sound reproducing unit selects audio data to be reproduced based on the characteristic amount detected by the detecting unit and the behavior information acquired by the acquiring unit when displaying the image data in the display unit.

6. The image editing apparatus according to claim 3, wherein the display unit displays text information included in the map information based on the map information together with the image data associated by the associating unit.

7. The image editing apparatus according to claim 4, wherein the detecting unit detects a characteristic amount of an emotion parameter in the facial picture image of the person as the characteristic amount of the picture image, and detects characteristic amounts of a sound volume component, a time component, and a frequency component as the characteristic amount of the sound parameter.

8. The image editing apparatus according to claim 3, wherein the control unit captures the image using the capturing unit when the characteristic amounts detected by the detecting unit are changed.

9. The image editing apparatus according to any one of claims 5 to 8, wherein the acquiring unit acquires at least one of information on a speed of the mobile object, tilt angle information, lateral G (gravity) information, and current position information as the behavior information.

10. An image editing method comprising:
an input step of receiving an input of image data including information on a date and a time;
an acquiring step of acquiring information on a route and a time at which a mobile object has passed a point on the route; and
an associating step of associating the image data with map information based on the information on the date and the time in the image data received by the input unit and the information on the route and the time acquired by the acquiring unit.

11. An image editing program that causes a computer to execute the image editing method according to claim 10.

12. A computer-readable recording medium storing therein the image editing program according to claim 11.
